# EUROPÄISCHE PATENTSCHRIFT

(11) **EP 1 741 949 B1**
(45) Veröffentlichungstag und Bekanntmachung des Hinweises auf die Patenterteilung: **17.12.2008**
(21) Anmeldenummer: 05106132.3
(22) Anmeldetag: 06.07.2005
(51) Int. Cl.: F16D 48/06

(54) **Verfahren zur Bestimmung der Temperatur einer Reibkupplung**
Method to determine the temperature of a friction clutch
Méthode pour déterminer la température d'un embrayage à friction

(43) Veröffentlichungstag der Anmeldung: 10.01.2007
(73) Patentinhaber: Getrag Ford Transmissions GmbH, 50735 Köln (DE)
(72) Erfinder: Hinsberger, Uwe, 50733 Köln (DE); Leibbrandt, Martin, 50181 Bedburg (DE); Schmitz, Harald, 44225 Dortmund (DE)

(56) Entgegenhaltungen:
- EP-A- 1 491 787
- DE-A1- 10 316 419
- FR-A- 2 828 719
- US-A- 5 067 599
- US-A- 5 307 269

## Beschreibung

Die Erfindung betrifft ein Verfahren zur Bestimmung der Temperatur einer Reibkupplung mit wenigstens einer Kupplungsscheibe und mit einer Druckplatte, die durch einen bewegbaren Kupplungssteller gegen die Kupplungsscheibe pressbar ist, um zwischen Kupplungsscheibe und Druckplatte ein Drehmoment zu übertragen.

Bei einer automatisierten Ansteuerung des Kupplungsstellers muss das Verhalten der Reibkupplung abgebildet werden, um ein gewünschtes Soll-Kupplungsmoment in eine Position des Kupplungsstellers umsetzen zu können. Dabei hängt das von der Kupplung übertragbare oder im Schlupf übertragene Moment nicht nur von der Position des Kupplungsstellers ab, sondern auch von einer Vielzahl von anderen Faktoren, wie Drehzahl, Schlupf, Verschleiß etc. Eine besondere Stellung hierbei hat die Temperatur der Reibkupplung, da sie einen besonders großen Einfluss auf die Charakteristik des Kupplungsmomentes hat.

Aus der EP 1 416 182 A2 und der US 5,307,269 sind Verfahren zur Bestimmung der Temperatur einer Reibkupplung bekannt, bei der die Temperatur gemessen wird. Die Messung der aktuellen Kupplungstemperatur stellt zwar eine einfache Möglichkeit für die Bestimmung der Kupplungstemperatur dar, doch ist sie mit vergleichsweise hohen Kosten verbunden, da sie eine zusätzliche Sensorik mit Temperatursensoren erfordert.

Die beiden oben genannten Druckschriften schlagen zudem auch vor, die aktuelle Kupplungstemperatur auf der Basis eines Berechnungsmodells für die Kupplungstemperatur zu berechnen. Die Berechnung der Temperatur stützt sich dabei auf eine Energiebilanz der Kupplung, bei der die ein- und austretenden Energieströme sowie die in der Kupplung gespeicherte Energie bilanziert wird. Naturgemäß kommt es dabei zu Ungenauigkeiten, die sich über einen längeren Zeitraum aufsummieren können, so dass das Temperaturmodell nach einer gewissen Betriebszeit keine ausreichend guten Ergebnisse liefert.

Eine Möglichkeit, dem Aufsummieren der Ungenauigkeiten über einen längeren Zeitraum entgegenzuwirken, besteht darin, das Temperaturmodell in regelmäßigen Abständen mit bekannten Referenzwerten abzugleichen. Dies jedoch erfordert in der Regel eine Temperaturmessung, die, wie oben beschrieben, mit Aufwand verbunden ist.

Die EP 1 491 787 A1 schlägt ein Verfahren zur Adaption einer Kupplungskennlinie vor, wenn es durch Erwärmung zu einer thermisch-mechanischen Verformung des Kupplungsaggregats kommt. In einigen Ausführungsbeispielen erfolgt die Adaption dabei ohne die Kupplungstemperatur als Eingabegröße, indem beispielsweise als Adaptionsparameter die Veränderung eines Tastpunkts der Kupplung verwendet wird oder die eingebrachte Reibleistung näherungsweise berechnet wird. In anderen Ausführungsbeispielen erfolgt die Festlegung des Adaptionsparameters in Abhängigkeit der Temperatur der Kupplung. Diese Temperatur muss gemessen oder auf anderem Wege bestimmt werden, wobei Temperaturmodelle über einen längeren Zeitraum zu besagten Ungenauigkeiten führen.

Der Erfindung liegt daher die Aufgabe zugrunde, ein Verfahren zur Bestimmung der Temperatur einer Reibkupplung bereitzustellen, das bei möglichst geringem Aufwand gute Ergebnisse erzielt.

Die der Erfindung zugrunde liegende Aufgabe wird durch das Verfahren gemäß Anspruch 1 gelöst. Bevorzugte Ausführungsformen der Erfindung sind den Unteransprüchen zu entnehmen.

Bei einer vollständig geschlossenen Kupplung nimmt der Kupplungssteller eine Endposition ein, die beim erfindungsgemäßen Verfahren ermittelt wird. Zusätzlich oder alternativ kann ein Abstand von dieser Endposition zu einer ausgewählten Position des Kupplungsstellers ermittelt werden. Anhand eines hinterlegten Kennfeldes, das den Zusammenhang zwischen der Temperatur der Reibkupplung und der Endposition des Kupplungsstellers bzw. den Zusammenhang zwischen der Temperatur und dem Abstand der Endposition zur ausgewählten Position des Kupplungsstellers darstellt, wird erfingdungsgemäß die Temperatur der Reibkupplung ermittelt. Ein direktes Messen der aktuellen Kupplungstemperatur ist daher nicht notwendig.

Das Verfahren greift auf die physikalischen Eigenschaften der Kupplungsscheibe sowie der daran angeformten Reibbeläge zurück, sich bei einer Temperaturerhöhung auszudehnen. Somit nehmen die Ausmaße der Kupplungsscheibe und somit auch eine Dicke der Kupplungsscheibe mit steigender Temperatur zu. Diese Zunahme der Dicke der Kupplungsscheibe führt dazu, dass die Endposition des Kupplungsstellers mit der Temperatur variiert. So erreicht beim Schließen der Kupplung die Druckplatte bei erhöhter Kupplungstemperatur und somit bei ausgedehnter Kupplungsscheibe den Punkt, bei der die Druckplatte mit einer gewissen Kraft an der Kupplungsscheibe anliegt, zu einem früheren Zeitpunkt. Somit kann durch die Lage des Kupplungsstellers bei einer vollständig geschlossenen Kupplung - soweit das Verhältnis der Lageänderung des Kupplungsstellers zur Lageänderung der Druckplatte eindeutig festgelegt ist - auf die Dicke der Kupplungsscheibe sowie der Reibbeläge geschlossen werden. Diese Dickenzunahme wiederum ist ein Maß für die Temperaturerhöhung, die sich in der Kupplung eingestellt hat. Ist der Zusammenhang zwischen der Temperatur der Reibkupplung und der Ausdehnung der Kupplungsscheibe bzw. der Endposition des Kupplungsstellers bekannt, kann somit auf die Temperatur der Kupplung geschlossen werden.

Die Ermittlung der Temperatur auf der Basis der Endposition des Kupplungsstellers und der hinterlegten Kennlinie setzt voraus, dass eine Abhängigkeit der Endposition von der Dickenänderung der Kupplungsscheibe und somit der Temperatur gegeben ist. Bei einer hydraulisch betätigten Kupplung mit einem Geberzylinder und einem Nehmerzylinder und einer dazwischen liegenden Hydraulikstrecke ist die Endposition eines Kolbens des Geberzylinders unabhängig von der Dickenänderung der Kupplungsscheibe, da diese Dickenänderung durch das so genannte Schnüffeln der zwischen Geberzylinder und Nehmerzylinder liegenden Hydraulikstrecke ausgeglichen wird. Somit kann die Endposition des Kolbens des Geberzylinders nicht allein für die Ermittlung der Temperatur der Reibkupplung zugrunde gelegt werden. Eine andere Möglichkeit besteht darin, die Endposition des Nehmerzylinders zu erfassen, was jedoch mit erhöhtem Aufwand verbunden ist.

Üblicherweise wird zwischen dem Kupplungssteller und der Druckplatte eine Tellerfeder eingesetzt, die ein nicht lineares Übersetzungsverhältnis aufweist. Eine Dikkenänderung der Kupplungsscheibe bzw. der Kupplung macht sich durch ein unterschiedliches Verschieben der Endposition und ausgewählter Positionen des Kupplungsstellers bemerkbar. Dadurch ändert sich der Abstand der Endposition zu der ausgewählten Position des Kupplungsstellers. Kann diese ausgewählte Position genau ermittelt werden, kann auch beim Geberzylinder mit nicht veränderlicher Endposition der sich verändernde Abstand zwischen der ausgewählten Position und der Endposition ermittelt werden. Anhand einer hinterlegten Kennlinie, die den Zusammenhang zwischen dem Abstand zwischen der ausgewählten Position und der Kupplungstemperatur darstellt, kann auf die Kupplungstemperatur geschlossen werden.

Um Verschleiß und ähnliche langfristige Änderungen der Reibscheibendicke zu erfassen, wird in einem bevorzugten Ausführungsbeispiel ein Wertepaar bestehend aus einer Referenzposition des Kupplungsstellers und einer Referenztemperatur ermittelt. Die Referenzposition stellt die Endposition des Kupplungsstellers bei einer bestimmten Temperatur dar.

Vorzugsweise ist die Referenztemperatur die Umgebungstemperatur und die Referenzposition ist die Endposition des Kupplungsstellers vor dem Einsatz der Kupplung. Insbesondere bei längerem Stillstand der Kupplung entspricht die Kupplungstemperatur der Umgebungstemperatur. Bei einem Kraftfahrzeug, das beispielsweise mit einer Reibkupplung ausgestattet sein kann, wird die Umgebungstemperatur zur Ermittlung der Temperatur der Ansaugluft ohnehin gemessen, so dass die Ermittlung des Wertepaares aus Umgebungstemperatur und Endposition des Kupplungsstellers vorzugsweise nach längerem Stillstand der Kupplung daher ohne nennenswerten Mehraufwand durchgeführt werden kann.

Durch die ermittelte Temperatur kann ein Temperaturmodell für die Kupplung abgeglichen werden. Mit dem Temperaturmodell wird die Temperatur der Kupplung anhand unterschiedlicher Einflussgrößen berechnet. Die Verwendung eines Temperaturmodells empfiehlt sich deswegen, weil die Ermittlung der Temperatur auf der Basis der Dickenänderung der Kupplungsscheibe nur bei einer vollständig geschlossenen Kupplung möglich ist. Jedoch benötigt die automatisierte Ansteuerung des Kupplungsstellers auch Temperaturdaten, wenn die Kupplung vollständig oder teilweise geöffnet ist.

Der Abgleich des Temperaturmodells mit der Temperatur auf der Basis der Änderung der Reibscheibendicke bzw. der Änderung des Abstands zwischen einer ausgewählten Position und der Endposition des Kupplungsstellers kann in regelmäßigen Abständen erfolgen. Somit wird sichergestellt, dass das Temperaturmodell gute Ergebnisse liefert.

Das Temperaturmodell kann die ein- und austretenden Energieströme sowie die gespeicherte Energie für die Kupplung bilanzieren. Dazu müssen beispielsweise die Vorgeschichte der Kupplungsvorgänge, die Wärmekoeffizienten der Kupplungsmaterialien, die Wärmeübergangskoeffizienten der Kupplungsoberflächen, die Umgebungseinflüsse Temperatur und Luftströmungsverhältnisse und weitere Faktoren erfasst werden.

Das Kennfeld kann auch den Zusammenhang zwischen der Kupplungstemperatur und wenigstens eines weiteren Parameters aufzeigen. Beispielsweise kann somit in das Kennfeld die Drehzahl eines Motors aufgenommen werden, der die Reibkupplung antreibt.

In einem bevorzugten Ausführungsbeispiel wird der Abstand zwischen der Endposition des Kupplungsstellers und dem Greifpunkt der Kupplung ermittelt. Unter dem Greifpunkt der Kupplung ist die Position des Kupplungsstellers zu verstehen, bei der beim Schließen der Kupplung gerade noch kein Drehmoment übertragen wird bzw. beim Öffnen der Kupplung gerade noch Drehmoment übertragen wird. Da der Greifpunkt der Kupplung ebenfalls von einer Reihe von Faktoren abhängt, deren Werte sich im Betrieb der Kupplung verändern können, sollte der Greifpunkt vorteilhafterweise ebenfalls in regelmäßigen Abständen ermittelt werden.

Insbesondere für elektrisch angetriebene Kupplungssteller eignet sich das erfindungsgemäße Verfahren, da die Bestimmung der Endposition zum Beispiel direkt an einem Elektromotor erfolgt. Da dort in der Regel ohnehin ein Wegaufnehmer für die Positionsregelung vorhanden ist, kommt das Verfahren bei dieser Ausführung ohne Mehraufwand aus.

Das Verfahren kann auch bei einem hydraulisch betätigten Kupplungssteller eingesetzt werden, wobei, wie oben bereits ausgeführt, hier eine Ermittlung eines Abstands einer ausgewählten Position (zB. Der Greifpunkt) zu der Endposition des Kupplungsstellers zweckmäßig ist.

Anhand der folgenden Figuren wird die Erfindung näher beschrieben. Es zeigen:
- Figur 1: eine schematische Ansicht einer Kupplung;
- Figur 2: ein Ablaufschema eines Ausführungsbeispiels der Erfindung;
- Figur 3: ein Kennfeld einer Endposition des Kupplungsstellers in Abhängigkeit von der Temperatur;
- Figur 4: ein Kennfeld einer Spanne zwischen Endposition und Greifpunkt des Kupplungsstellers in Abhängigkeit von der Temperatur; und
- Figur 5: exemplarisch die Position eines Kupplungsstellers und die Temperatur der Kupplung in Abhängigkeit der Zeit;

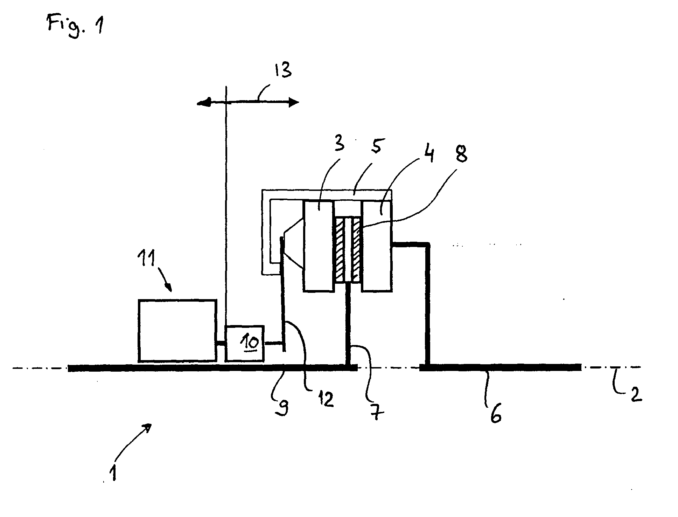

Figur 1 zeigt schematisch eine Kupplung, die mit dem Bezugszeichen 1 versehen ist. Von der Kupplung 1 ist nur der obere Teil bezüglich einer Drehachse 2 dargestellt. Die Kupplung 1 umfasst eine Druckplatte 3 und eine Widerlagerplatte 4, wobei Druck platte 3 und Widerlagerplatte 4 über einen Kupplungstopf 5 drehfest miteinander verbunden sind. In axialer Richtung, dh. in Richtung der Drehachse 2, lässt sich die Druckplatte 3 verschieben. Die Widerlagerplatte ist drehfest mit einer Eingangswelle 6 der Kupplung 1 verbunden. Die Eingangswelle 6 kann beispielsweise die Kurbelwelle eines hier nicht dargestellten Verbrennungsmotors eines Kraftfahrzeugs sein.

In axialer Richtung zwischen Druckplatte 3 und Widerlagerplatte 4 ist eine Kupplungsscheibe 7 mit Reibbelägen 8 angeordnet. Die Kupplungsscheibe 7 ist drehfest mit einer Ausgangswelle 9 der Kupplung 1 verbunden. Die Ausgangswelle 9 kann beispielsweise die Eingangswelle eines Schaltgetriebes darstellen.

Die Betätigung der Druckplatte 3, also ein axiales Verschieben der Druckplatte 3 erfolgt über einen bewegbaren Kupplungssteller 10, der Teil einer Stellvorrichtung 11 ist. Der Kupplungssteller 10 ist über eine Membranfeder 12 mit der Druckplatte 3 verbunden. In der in Figur 1 gezeigten Position des Kupplungsstellers 10 soll die Kupplung 1 vollständig geschlossen sein, dh, der Kupplungssteller 10 nimmt eine Endposition in Richtung der Drehachse 2.

Aufgrund von Verschleiß beispielsweise der Kupplungsscheibe 7 mit den Reibbelägen 8 ändert sich die Endposition des Kupplungsstellers 10. Auch eine thermische Ausdehnung der Kupplungsscheibe 7 hat Einfluss auf die Lage der Endposition des Kupplungsstellers 10. Dass sich die Lage der Endposition ändert, soll durch den Pfeil 13 verdeutlicht werden.

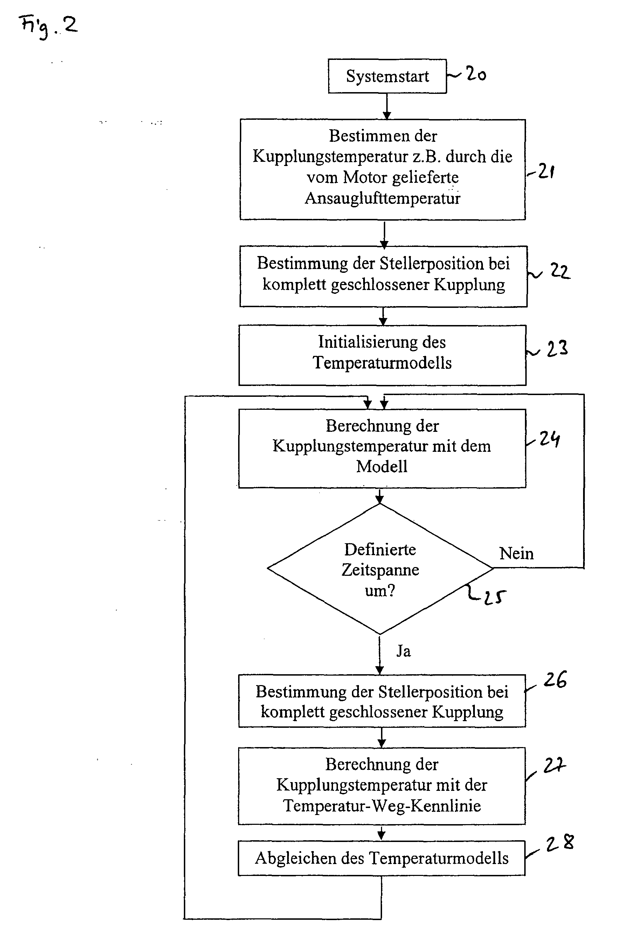

Figur 2 zeigt das Ablaufschema eines bevorzugten Ausführungsbeispiels der Erfindung. Das Verfahren wird in Gang gesetzt, wenn beispielsweise ein Kraftfahrzeug mit der Reibkupplung 1 gestartet wird (siehe Block 20, "Systemstart"). Danach wird in Schritt 21 (bzw. Block 21) die Kupplungstemperatur bestimmt. Eine einfache Möglichkeit besteht darin, die Temperatur der von dem Motor des Kraftfahrzeugs angesaugten Luft zugrunde zu legen, da diese ohnehin gemessen wird. Bei längerer Stillstandszeit des Kraftfahrzeugs entspricht die Kupplungstemperatur exakt der Umgebungstemperatur bzw. der Temperatur der angesaugten Luft.

In Schritt 22 erfolgt die Bestimmung der Endposition des Kupplungsstellers bei vollständig geschlossener Kupplung (Reibkupplung 1). Somit kann ein Referenzwertepaar festgelegt, bestehend aus der Endposition des Kupplungsstellers 10 und der ermittelten Referenztemperatur, die vorzugsweise der Umgebungstemperatur entspricht.

Nachdem ein Temperaturmodell initialisiert wurde (Schritt 23), das vorzugsweise auf der Basis einer Energiebilanz die Temperatur der Reibkupplung 1 auch bei einer geöffneten Kupplung ermittelt, wird die Temperatur der Reibkupplung 1 in Schritt 24 berechnet. In regelmäßigen Abständen, was durch eine Abfrage 25 erfolgt, ob eine definierte Zeitspanne abgelaufen ist, wird die Endposition des Kupplungsstellers 10 bestimmt (Schritt 26). Anhand einer hinterlegten Kennlinie (oder eines hinterlegten Kennfeldes), die den Zusammenhang zwischen Temperatur der Reibkupplung und Endposition des Kupplungsstellers 10 bei vollständig geschlossener Reibkupplung 1 aufzeigt, wird in Schritt 27 die Temperatur ermittelt. Mit dieser Temperatur wird in Schritt 28 das Temperaturmodell abgeglichen.

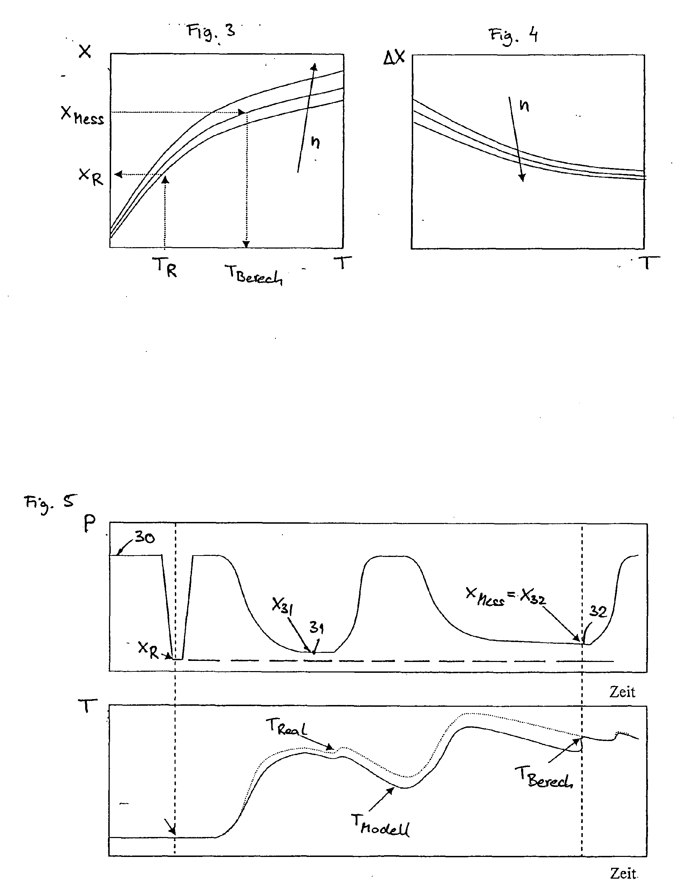

Die Figur 3 zeigt ein Beispiel für die oben bereits angesprochene Kennlinie, die den Zusammenhang zwischen Temperatur T und Endposition X aufzeigt. Dargestellt sind drei verschiedene Kennlinien für unterschiedlichen Drehzahlen n des Motors des Kraftfahrzeugs.

Des weiteren ist in Figur 3 ein Referenzwert T_{R} eingetragen, der der ermittelten Referenztemperatur nach erfolgten Systemstart (vgl. Schritte 20 und 21 in Figur 2) entsprechen soll. Da auch unmittelbar nach Systemstart 20 eine Referenz-Endposition X_{R} (siehe Schritt 22 in Figur 2) bei vollständig geschlossener Kupplung ermittelt wird, können die Kennlinien so verschoben werden, dass das ermittelte Referenzwertepaar auf der entsprechenden Kennlinie liegt. Durch die Anpassung werden langfristige Änderungen der Endposition des Kupplungsstellers 10 wie Verschleiß etc. berücksichtigt. Anhand des derart angepassten Kennfeldes lässt sich nun bei Kenntnis der Endposition im Betrieb des Kraftfahrzeugs auf die augenblickliche Temperatur der Reibkupplung 1 schließen (siehe X_{Mess} und T_{Berech} in Figur 3).

Figur 4 zeigt Kennlinien, aus denen die Temperatur T der Reibkupplung 1 aus einem Abstand ΔX des Greifpunktes der Reibkupplung 1 zu der Endposition des Kupplungsstellers 10 herleitbar ist. Dazu muss die Lage des Greifpunktes bekannt sein, die durch entsprechende Verfahren ermittelt werden kann.

Figur 5 schließlich zeigt einen Verlauf der Position P des Kupplungsstellers 10 (oberes Diagramm) und einen Verlauf der Temperatur T der Reibkupplung 1 (unteres Diagramm) über der Zeit. In Punkt 30 ist die Reibkupplung 1 vollständig geöffnet und wird dann vollständig geschlossen, so dass sie (nach erfolgten Systemstart 20) die Endposition X_{R} einnimmt. Wie oben bereits beschrieben, wird dabei auch die Temperatur T_{R} ermittelt, um durch Kalibrierung der Kennlinien gemäß Figuren 3 oder 4 langfristige Einflüsse auf die Endposition des Kupplungsstellers wie Verschleiß etc. ausgleichen zu können.

Durch mehrere Öffnungs- und Schließvorgänge, bei denen die Reibkupplung zum Teil mit Schlupf Drehmoment überträgt und dabei Wärme freigesetzt wird, steigt die Temperatur der Reibkupplung an. Durch Wärmeabgabe an die Umgebung kommt es auch zu einem Temperaturrückgang, wenn beispielsweise die Kupplung vollständig geöffnet ist. Die obere Temperaturkurve T_{Real} soll dabei der wirklichen Temperatur der Reibkupplung entsprechen, während die untere Temperaturkurve T_{Modell} die Temperaturen wiedergeben soll, die durch das Temperaturmodell berechnet werden.

Aufgrund des Temperaturanstiegs ändert sich die Endposition des Kupplungsstellers bei vollständig geschlossener Kupplung. So weist in Punkt 31 oder in Punkt 32 die Endposition E₃₁ bzw. E₃₂ einen Abstand zu der Endposition ER auf. In Punkt 32 erfolgt ein Abgleich des Temperaturmodells anhand der ermittelten oder berechneten Temperatur T_{Berech} auf der Basis des gemessenen Werte X_{Mess}. Entsprechend des Abgleichs werden die Kurven T_{Real} und T_{Modell} zusammengeführt.

### Bezugszeichenliste

- 1: Reibkupplung
- 2: Drehachse
- 3: Druckplatte
- 4: Widerlagerplatte
- 5: Kupplungstopf
- 6: Eingangswelle
- 7: Kupplungsscheibe
- 8: Reibbelag
- 9: Ausgangswelle
- 10: Kupplungssteller
- 11: Stellvorrichtung
- 12: Tellerfeder
- 13: Doppelpfeil

- 20: Verfahrenschritt
- 21: Verfahrenschritt
- 22: Verfahrenschritt
- 23: Verfahrenschritt
- 24: Verfahrenschritt
- 25: Abfrage
- 26: Verfahrenschritt
- 27: Verfahrenschritt
- 28: Verfahrenschritt

- 30: Position des Kupplungsstellers
- 31: Position des Kupplungsstellers
- 32: Position des Kupplungsstellers

## Patentansprüche

1. Verfahren zur Bestimmung der Temperatur einer Reibkupplung (1) mit wenigstens einer Kupplungsscheibe (7) und mit wenigstens einer Druckplatte (3), die durch einen Kupplungssteller (10) gegen die Kupplungsscheibe (7) pressbar ist, um zwischen Kupplungsscheibe (7) und Druckplatte (3) ein Drehmoment zu übertragen, wobei bei einer vollständig geschlossenen Kupplung der Kupplungssteller (10) eine Endposition einnimmt, **gekennzeichnet, durch** die folgenden Verfahrensschritte:
Ermittlung der Endposition des Kupplungsstellers (10) oder Ermittlung eines Abstands von der Endposition zu einer ausgewählten Position des Kupplungsstellers (10);
Ermittlung der Temperatur der Reibkupplung (1) anhand einer hinterlegten Kennlinie oder eines Kennfeldes, die bzw. das den Zusammenhang zwischen der Temperatur der Reibkupplung (1) und der Endposition des Kupplungsstellers (10) bzw. den Zusammenhang zwischen der Temperatur der Reibkupplung (1) und dem Abstands der Endposition zur ausgewählten Position des Kupplungsstellers (10) darstellt.

2. Verfahren nach Anspruch 1, **dadurch gekennzeichnet, dass** ein Wertepaar bestehend aus einer Referenzposition des Kupplungsstellers (10) und einer Referenztemperatur ermittelt wird.

3. Verfahren nach Anspruch 2, **dadurch gekennzeichnet, dass** als Referenztemperatur die Umgebungstemperatur und als Referenzposition die Endposition des Kupplungsstellers (10) vor dem Einsatz der Reibkupplung (1) verwendet wird.

4. Verfahren nach einem der Ansprüche 1 bis 3, **dadurch gekennzeichnet, dass** durch die ermittelte Temperatur ein Temperaturmodell für die Reibkupplung (1) abgeglichen wird.

5. Verfahren nach Anspruch 4, **dadurch gekennzeichnet, dass** der Abgleich des Temperaturmodells in regelmäßigen Abständen erfolgt.

6. Verfahren nach Anspruch 4, **dadurch gekennzeichnet, dass** das Temperaturmodell die ein- und austretenden Energieströme sowie die gespeicherte Energie für die Reibkupplung bilanziert.

7. Verfahren nach einem der Ansprüche 1 bis 6, **dadurch gekennzeichnet, dass** das Kennfeld den Zusammenhang zwischen der Temperatur der Reibkupplung und wenigstens eines weiteren Parameters aufzeigt.

8. Verfahren nach einem der Ansprüche 1 bis 6, **dadurch gekennzeichnet, dass** der Abstand zwischen der Endposition des Kupplungsstellers (10) und dem Greifpunkt der Reibkupplung (1) ermittelt wird.

9. Verfahren nach einem der Ansprüche 1 bis 8, **dadurch gekennzeichnet, dass** der Kupplungssteller (10) elektrisch betätigt wird, wobei ein Wegaufnehmer zur Positionsregelung des Kupplungsstellers (10) die Endposition angibt.

10. Verfahren nach einem der Ansprüche 1 bis 8, **dadurch gekennzeichnet, dass** der Kupplungssteller (10) hydraulisch betätigt wird.

## Claims

1. Method for determining the temperature of a friction clutch (1) having at least one clutch disc (7) and having at least one pressure plate (3) which can be pressed against the clutch disc (7) by means of a clutch actuator (10) in order to transmit a torque between the clutch disc (7) and the pressure plate (3), with the clutch actuator (10) assuming an end position when the clutch is completely closed, **characterized by** the following method steps:
determining the end position of the clutch actuator (10) or determining a spacing from the end position to a selected position of the clutch actuator (10);
determining the temperature of the friction clutch (1) on the basis of a stored characteristic curve or characteristic map which represents the relationship between the temperature of the friction clutch (1) and the end position of the clutch actuator (10) or the relationship between the temperature of the friction clutch (1) and the spacing from the end position to the selected position of the clutch actuator (10).

2. Method according to Claim 1, **characterized in that** a value pair comprising a reference position of the clutch actuator (10) and a reference temperature is determined.

3. Method according to Claim 2, **characterized in that** the ambient temperature is used as a reference temperature and the end position of the clutch actuator (10) before the use of the friction clutch (1) is used as a reference position.

4. Method according to one of Claims 1 to 3, **characterized in that** a temperature model for the friction clutch (1) is calibrated by means of the determined temperature.

5. Method according to Claim 4, **characterized in that** the calibration of the temperature model takes place at regular intervals.

6. Method according to Claim 4, **characterized in that** the temperature model balances the inflowing and outflowing energy flows and the stored energy for the friction clutch.

7. Method according to one of Claims 1 to 6, **characterized in that** the characteristic map represents the relationship between the temperature of the friction clutch and at least one further parameter.

8. Method according to one of Claims 1 to 6, **characterized in that** the spacing between the end position of the clutch actuator (10) and the biting point of the friction clutch (1) is determined.

9. Method according to one of Claims 1 to 8, **characterized in that** the clutch actuator (10) is electrically actuated, with a travel sensor indicating the end position for position regulation of the clutch actuator (10).

10. Method according to one of Claims 1 to 8, **characterized in that** the clutch actuator (10) is hydraulically actuated.

## Revendications

1. Procédé pour déterminer la température d'un embrayage à friction (1) comprenant au moins un disque d'embrayage (7) et au moins un plateau de pression (3), qui peut être pressé par un actionneur d'embrayage (10) contre le disque d'embrayage (7), afin de transmettre un couple entre le disque d'embrayage (7) et le plateau de pression (3), l'actionneur d'embrayage (10) adoptant une position d'extrémité lorsqu'un embrayage est complètement fermé, **caractérisé par** les étapes de procédé suivantes :
détection de la position d'extrémité de l'actionneur d'embrayage (10) ou détection d'une distance de la position d'extrémité à une position sélectionnée de l'actionneur d'embrayage (10) ;
détection de la température de l'embrayage à friction (1) à l'aide d'une caractéristique ou d'un champ caractéristique déposé(e), qui représente le rapport entre la température de l'embrayage à friction (1) et la position d'extrémité de l'actionneur d'embrayage (10) ou le rapport entre la température de l'embrayage à friction (1) et la distance de la position d'extrémité à la position sélectionnée de l'actionneur d'embrayage (10).

2. Procédé selon la revendication 1, **caractérisé en ce qu'**une paire de valeurs constituée d'une position de référence de l'actionneur d'embrayage (10) et d'une température de référence est détectée.

3. Procédé selon la revendication 2, **caractérisé en ce que** l'on utilise comme température de référence la température de l'environnement et comme position de référence la position d'extrémité de l'actionneur d'embrayage (10) avant l'utilisation de l'embrayage à friction (1).

4. Procédé selon l'une quelconque des revendications 1 à 3, **caractérisé en ce qu'**un modèle de température pour l'embrayage à friction (1) est ajusté par la température détectée.

5. Procédé selon la revendication 4, **caractérisé en ce que** l'ajustement du modèle de température s'effectue à intervalles réguliers.

6. Procédé selon la revendication 4, **caractérisé en ce que** le modèle de température fait le bilan des flux énergétiques entrant et sortant ainsi que de l'énergie stockée pour l'embrayage à friction.

7. Procédé selon l'une quelconque des revendications 1 à 6, **caractérisé en ce que** le champ caractéristique indique la corrélation entre la température de l'embrayage à friction et au moins un autre paramètre.

8. Procédé selon l'une quelconque des revendications 1 à 6, **caractérisé en ce que** la distance entre la position d'extrémité de l'actionneur d'embrayage (10) et le point d'application de l'embrayage à friction (1) est détectée.

9. Procédé selon l'une quelconque des revendications 1 à 8, **caractérisé en ce que** l'actionneur d'embrayage (10) est actionné électriquement, un enregistreur de course pour le réglage de la position de l'actionneur d'embrayage (10) indiquant la position d'extrémité.

10. Procédé selon l'une quelconque des revendications 1 à 8, **caractérisé en ce que** l'actionneur d'embrayage (10) est actionné hydrauliquement.
